# EUROPEAN PATENT SPECIFICATION

(11) **EP 4 122 640 B1**
(45) Date of publication and mention of the grant of the patent: **07.01.2026**
(21) Application number: 21770578.9
(22) Date of filing: 16.03.2021
(51) Int. Cl.: B23K 35/363, B23K 35/36, B23K 35/02, C22C 13/00, B23K 35/362, B23K 35/26

(54) **FLUX AND SOLDER PASTE**
FLUSSMITTEL UND LÖTPASTE
FLUX ET PÂTE À BRASER

(30) Priority: 18.03.2020 JP 2020047979
(43) Date of publication of application: 25.01.2023
(73) Proprietor: Senju Metal Industry Co., Ltd., Tokyo 120-8555 (JP)
(72) Inventor: TAKAGI, Tomoko, Tokyo 120-8555 (JP); SASAKI, Tomoki, Tokyo 120-8555 (JP)
(74) Representative: Lavoix
(86) International application number: PCT/JP2021/010564
(87) International publication number: WO 2021/187468

(56) References cited:
- EP-A1- 3 335 829
- EP-A1- 4 230 343
- JP-A- 2013 173 184
- JP-A- 2015 123 472
- JP-A- 2015 123 472
- JP-A- 2017 064 759
- JP-A- 2017 064 759
- JP-B1- 6 638 840

## Description

### [Technical Field]

The present invention relates to a flux and a solder paste.

### [Background Art]

A flux used for soldering has the effect of chemically removing metal oxides present on a solder, and the metal surface of an object to be joined, which is a soldering target, thereby enabling the movement of metal elements at the boundary between two objects to be joined. Therefore, by performing soldering using the flux, an intermetallic compound is formed between the solder, and the metal surface of the object to be joined. Thereby, strong joining can be obtained.

A solder paste is a composite material obtained by mixing a solder alloy powder and a flux. The flux generally contains a resin component, a solvent, an activator, a thixotropic agent, and the like. In soldering using the solder paste, first, the solder paste is printed on a soldering part such as an electrode of a substrate, and components are mounted on this soldering part. Subsequently, when the substrate is heated in a heating furnace called a reflow furnace, a solder is melted, and soldering is completed.

Conventionally, a flux containing a hydrohalic acid salt has been used as an activator.

Furthermore, in order to obtain excellent solderability, a flux containing a rosin derivative having a primary carboxy group has been proposed (refer to Patent Document 1). Moreover, a solder composition which is supposed to sufficiently suppress a change of copper foil color under a flux residue after soldering has been proposed, wherein the solder composition contains a flux containing (A) a rosin-based resin, (B) an activator, (C) a solvent, and (D) an antioxidant, and (E) a solder powder, and is characterized in that the (D) component is at least one selected from a group consisting of an organic sulfur diester compound having one or more sulfurs in a molecule and two or more ester bonds and a group consisting of a hindered phenol diamide compound having two or more amide bonds and a hindered phenol structure in a molecule (refer to Patent Document 2). A flux composition which is supposed to sufficiently suppress voids when used as a solder composition has been proposed, wherein the flux composition contains (A) a rosin-based resin, (B) an activator, (C) a liquid polymer, (D) a solvent and (E) a thixotropic agent, where the (C) liquid polymer is a polymer which is a liquid at 25°C and is liquid at 250°C, a ratio (Y/X) of the total amount Y of the (C) liquid polymer and the (C) solvent to be blended to the total amount X of the (A) rosin-based resin, the (B) activator and the (E) thixotropic agent to be blended is 1.4 or more and 2.3 or less, and an amount of the (C) liquid polymer to be blended is 25 mass% or more and 55 mass% or less with respect to 100 mass% of the flux composition (refer to Patent Document 3). A flux composition and a solder paste composition which is supposed to ensure good printability without impairing solderability (prevention of occurrence of voids and solder balls) and regardless of the metal mask thickness and opening diameter, and is also supposed to provide reliability of the flux residue (adhesiveness and insulation resistance of the residue) has been proposed, wherein the flux composition comprises a base resin (A), an activator (B), and a paraffin wax (C), in which the paraffin wax (C) comprising 9% by mass or more and 20% by mass or less of isoparaffin and/or cycloparaffin, and the amount of the paraffin wax (C) is from 0.5% by mass to 20% by mass with reference to the total amount of the flux composition (refer to Patent Document 4).

### [Citation List]

### [Patent Document2]

[Patent Document 1]
   Japanese Unexamined Patent Application, First Publication No. H10-233577
[Patent Document 2]
   Japanese Patent Application JP 2015 123472 A
[Patent Document 3]
   Japanese Patent Application JP 2017 064759 A
[Patent Document 4]
   European Patent Application EP 3 335 829 A1

### [Summary of Invention]

### [Technical Problem]

The solder paste generally has problems that, as the particle size of the solder alloy powder becomes smaller, the viscosity of the solder paste is likely to increase with time, the solderability deteriorates, and solder balls are likely to be generated.

Therefore, an object of the present invention is to provide a flux and a solder paste which have excellent viscosity stability over time and are capable of preventing the generation of solder balls, even when using a solder alloy powder in which the content of solder alloy particles having a particle size of 8 µm or less is 99% by mass or more.

### [Solution to Problem]

In order to achieve the above-mentioned object, the present invention adopts the following constitution.

That is, a first aspect of the present invention is a solder paste containing: a solder alloy powder in which a content of solder alloy particles having a particle size of 8 µm or less is 99% by mass or more with respect to a total mass of the solder alloy powder; and a flux, in which the flux contains an acid-modified rosin, a solvent, an activator, and a thixotropic agent, and the activator contains a halogenated aliphatic compound, and a dicarboxylic acid represented by General Formula (2). 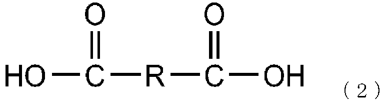 [in the formula, R represents an alkylene group having 1 to 7 carbon atoms, or a single bond, provided that a methylene group constituting the alkylene group may be substituted with an oxygen atom]

In the solder paste according to the first aspect, an acid value of the acid-modified rosin is 200 mgKOH/g or more, and a content of the acid-modified rosin is 15% by mass or more and 40% by mass or less with respect to a total mass of the flux.

Furthermore, in the solder paste according to the first aspect, a content of the halogenated aliphatic compound is 1% by mass or more and 5% by mass or less with respect to a total mass of the flux.

Furthermore, in the solder paste according to the first aspect, a content of the dicarboxylic acid is 3% by mass or more and 6% by mass or less with respect to a total mass of the flux.

Furthermore, in the solder paste according to the first aspect, the halogenated aliphatic compound is preferably 2,3-dibromo-1,4-butanediol.

Furthermore, a second aspect of the present invention is a flux which is used for a solder paste containing a solder alloy powder, in which in the solder alloy powder, a content of solder alloy particles having a particle size of 8 µm or less is 99% by mass or more with respect to a total mass of the solder alloy powder, the flux contains a rosin, a solvent, an activator, and a thixotropic agent, the rosin includes an acid-modified rosin, the activator contains a halogenated aliphatic compound, and a dicarboxylic acid represented by General Formula (2), and the dicarboxylic acid includes one or more selected from the group consisting of an oxalic acid and a diglycolic acid.

Furthermore, in the flux according to the second aspect of the present invention, an acid value of the acid-modified rosin is 200 mgKOH/g or more, and a content of the acid-modified rosin is 15% by mass or more and 40% by mass or less with respect to a total mass of the flux.

Furthermore, in the flux according to the second aspect of the present invention, a content of the halogenated aliphatic compound is 1% by mass or more and 5% by mass or less with respect to a total mass of the flux.

Furthermore, in the flux according to the second aspect of the present invention, a content of the dicarboxylic acid is 3% by mass or more and 6% by mass or less with respect to a total mass of the flux.

Furthermore, in the flux according to the second aspect of the present invention, a content of the acid-modified rosin is preferably 60% by mass or more and 100% by mass or less with respect to a total mass of the rosin.

Furthermore, in the flux according to the second aspect of the present invention, the halogenated aliphatic compound preferably contains a halogenated aliphatic alcohol, and a content of the halogenated aliphatic alcohol is preferably 60% by mass or more and 100% by mass or less with respect to a total mass of the halogenated aliphatic compound.

Furthermore, in the flux according to the second aspect of the present invention, the halogenated aliphatic alcohol is preferably 2,3-dibromo-1,4-butanediol.

Furthermore, in the flux according to the second aspect of the present invention, a total content of the oxalic acid and the diglycolic acid is 80% by mass or more and 100% by mass or less with respect to a total mass of the dicarboxylic acid.

Furthermore, a third aspect of the present invention is use of a flux for making a solder paste containing a solder alloy powder and the flux, wherein in the solder alloy powder, a content of solder alloy particles having a particle size of 8 µm or less is 99% by mass or more with respect to a total mass of the solder alloy powder, wherein the flux contains an acid-modified rosin, a solvent, an activator, and a thixotropic agent, the activator contains a halogenated aliphatic compound, and a dicarboxylic acid represented by General Formula (2), an acid value of the acid-modified rosin is 200 mgKOH/g or more, a content of the acid-modified rosin is 15% by mass or more and 40% by mass or less with respect to a total mass of the flux, a content of the halogenated aliphatic compound is 1% by mass or more and 5% by mass or less with respect to a total mass of the flux, and a content of the dicarboxylic acid is 3% by mass or more and 6% by mass or less with respect to a total mass of the flux,

### [Advantageous Effects of Invention]

According to the present invention, it is possible to provide a flux and a solder paste which have excellent viscosity stability over time and are capable of preventing the generation of solder balls, even when using a solder alloy powder in which the content of solder alloy particles having a particle size of 8 µm or less is 99% by mass or more.

### [Brief Description of Drawings]

Fig. 1 is a graph showing the temperature change at the time of reflow in the evaluation of a solder ball generation prevention ability in Examples.
Fig. 2 is a photograph obtained by imaging the state in which less than 10 solder particles of 20 µm or less were confirmed around a solder in Examples.
Fig. 3 is a photograph obtained by imaging the state in which 10 or more and less than 40 solder particles of 20 µm or less were confirmed around a solder in Examples.
Fig. 4 is a photograph obtained by imaging the state in which 40 or more solder particles of 20 µm or less, and a powder larger than 20 µm were confirmed to be generated or unaggregated around a solder in Examples.

### [Description of Embodiments]

### (Flux)

A flux of the present embodiment is used for a solder paste containing a solder alloy powder.

The flux of the present embodiment contains an acid-modified rosin, a solvent, an activator, and a thixotropic agent.

A solder paste has a problem that the viscosity of the solder paste is likely to increase with time as the particle size of a solder alloy powder becomes smaller.

The flux of the present embodiment makes it possible for a solder paste to have sufficient viscosity stability over time and solder ball generation prevention ability even when the particle size of a solder alloy powder used is small, particularly even when using a solder alloy powder in which the content of solder alloy particles having the particle size of 8 µm or less is 99% by mass or more.

### <Acid-modified rosin>

When the flux of the present embodiment contains the acid-modified rosin, this makes it possible to have a sufficient solder ball generation prevention ability.

Examples of the acid-modified rosin include a phenol-modified rosin, α,β-unsaturated carboxylic acid-modified products (acrylic acid-modified rosin, maleic acid-modified rosin, fumaric acid-modified rosin, and the like), and purified products, hydrogenated products, and disproportionated products of the α,β-unsaturated carboxylic acid-modified products and the like.

For the acid-modified rosin, one type may be used alone, or two or more types may be mixed and used.

The acid-modified rosin is preferably an α,β-unsaturated carboxylic acid-modified product, and more preferably one or more selected from the group consisting of a maleic acid-modified hydrogenated rosin and an acrylic acid-modified hydrogenated rosin.

The acid value of the acid-modified rosin is 200 mgKOH/g or more.

The content of the acid-modified rosin is 15% by mass or more and 40% by mass or less, preferably 20% by mass or more and 40% by mass or less, and further preferably 30% by mass or more and 40% by mass or less with respect to the total mass of the flux.

### <Solvent>

Examples of the solvent include alcohol solvents, glycol ether solvents, and terpineols.

Examples of the alcohol solvents include isopropyl alcohol, 1,2-butanediol, isobornyl cyclohexanol, 2,4-diethyl-1,5-pentanediol, 2,2-dimethyl-1,3-propanediol, 2,5-dimethyl-2,5-hexanediol, 2,5-dimethyl-3-hexyne-2,5-diol, 2,3-dimethyl-2,3-butanediol, 2-methylpentane-2,4-diol, 1,1,1-tris(hydroxymethyl)propane, 2-ethyl-2-hydroxymethyl-1,3-propanediol, 2,2'-oxybis(methylene)bis(2-ethyl-1,3-propanediol), 2,2-bis(hydroxymethyl)-1,3-propanediol, 1,2,6-trihydroxyhexane, 1-ethynyl-1-cyclohexanol, 1,4-cyclohexanediol, 1,4-cyclohexanedimethanol, and 2,4,7,9-tetramethyl-5-decyne-4,7-diol.

Examples of the glycol ether solvents include diethylene glycol mono-2-ethylhexyl ether, ethylene glycol monophenyl ether, diethylene glycol monohexyl ether, diethylene glycol dibutyl ether, triethylene glycol monobutyl ether, methyl propylene triglycol, butyl propylene triglycol, triethylene glycol butylmethyl ether, and tetraethylene glycol dimethyl ether.

For the solvent, one type or two or more types can be used.

### <Activator>

The activator contained in the flux of the present embodiment contains a halogenated aliphatic compound and a specific dicarboxylic acid.

### <<Halogenated aliphatic compound>>

When the flux of the present embodiment contains the halogenated aliphatic compound, this makes it possible for the solder paste to have sufficient viscosity stability over time and solder ball generation prevention ability even when using the solder alloy powder in which the content of the solder alloy particles having the particle size of 8 µm or less is 99% by mass or more with respect to the total mass of the solder alloy powder.

Furthermore, when the flux of the present embodiment contains the halogenated aliphatic compound, this makes it possible for the solder paste to have sufficient viscosity stability over time and solder ball generation prevention ability even when using a solder alloy powder composed of a solder alloy particle group having the particle size of 5 µm or less.

The halogenated aliphatic compound is a compound having a halogenated aliphatic hydrocarbon group. The halogenated aliphatic hydrocarbon group refers to one in which a part or all of hydrogen atoms constituting the aliphatic hydrocarbon group are substituted with halogen atoms. Examples of the halogen atoms include a fluorine atom, a chlorine atom, a bromine atom, and an iodine atom.

The aliphatic hydrocarbon group may be any of a saturated aliphatic hydrocarbon group or an unsaturated aliphatic hydrocarbon group.

Examples of the halogenated aliphatic compound include halogenated aliphatic alcohols and halogenated heterocyclic compounds.

Examples of the halogenated aliphatic alcohols include 1-bromo-2-propanol, 3-bromo-1-propanol, 3-bromo-1,2-propanediol, 1-bromo-2-butanol, 1,3-dibromo-2-propanol, 2,3-dibromo-1-propanol, 1,4-dibromo-2-butanol, 2,3-dibromo-1,4-butanediol, and trans-2,3-dibromo-2-butene-1,4-diol.

Examples of the halogenated heterocyclic compounds include a compound represented by General Formula (1).

R₁-(R₂)ₙ (1)

[in the formula, R₁ represents an n-valent heterocyclic group, and R₂ represents a halogenated aliphatic hydrocarbon group]

Examples of heterocyclic rings of the n-valent heterocyclic group as R₁ include a ring structure in which a part of carbon atoms constituting an aliphatic hydrocarbon or an aromatic hydrocarbon ring is substituted with a heteroatom. Examples of the heteroatom in this heterocyclic ring include an oxygen atom, a sulfur atom, and a nitrogen atom. This heterocyclic ring is preferably a 3- to 10-membered ring, and more preferably a 5- to 7-membered ring. Examples of this heterocyclic ring include an isocyanurate ring.

The halogenated aliphatic hydrocarbon group as R₂ preferably has 1 to 10 carbon atoms, more preferably 2 to 6 carbon atoms, and further preferably 3 to 5 carbon atoms. Furthermore, R₂ is preferably a brominated aliphatic hydrocarbon group or a chlorinated aliphatic hydrocarbon group, more preferably a brominated aliphatic hydrocarbon group, and further preferably a brominated saturated aliphatic hydrocarbon group.

Examples of the halogenated heterocyclic compounds include tris-(2,3-dibromopropyl)isocyanurate.

For the halogenated aliphatic compound, one type may be used alone, or two or more types may be mixed and used.

The halogenated aliphatic compound is preferably a halogenated aliphatic alcohol, and more preferably 2,3-dibromo-1,4-butanediol.

The content of the halogenated aliphatic compound is 1% by mass or more and 5% by mass or less with respect to the total mass of the flux.

When the flux of the present embodiment contains a halogenated aliphatic alcohol, the content of the halogenated aliphatic alcohol is preferably 60% by mass or more and 100% by mass or less, and more preferably 80% by mass or more and 100% by mass or less with respect to the total mass of the halogenated aliphatic compound.

When the content of the halogenated aliphatic alcohol is equal to or more than the above-mentioned lower limit value, the solder ball generation prevention ability can be made excellent even when using the solder alloy powder in which the content of the solder alloy particles having the particle size of 8 µm or less is 99% by mass or more.

Furthermore, when the content of the halogenated aliphatic alcohol is equal to or more than the above-mentioned lower limit value, the solder ball generation prevention ability can be made excellent even when using the solder alloy powder composed of the solder alloy particle group having the particle size of 5 µm or less.

### <<Specific dicarboxylic acid>>

When the flux of the present embodiment contains the specific dicarboxylic acid, this makes it possible to have a sufficient solder ball generation prevention ability even when using the solder alloy powder in which the content of the solder alloy particles having the particle size of 8 µm or less is 99% by mass or more.

Furthermore, when the flux of the present embodiment contains the specific dicarboxylic acid, this makes it possible to have a sufficient solder ball generation prevention ability even when using the alloy powder composed of the solder alloy particle group having the particle size of 5 µm or less.

The specific dicarboxylic acid contained in the flux of the present embodiment is a compound represented by General Formula (2). 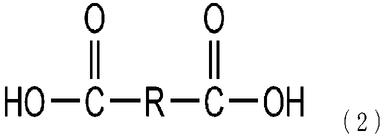 [in the formula, R represents an alkylene group having 1 to 7 carbon atoms, or a single bond, provided that a methylene group constituting the alkylene group may be substituted with an oxygen atom]

In General Formula (2), when R is an alkylene group, the alkylene group may be linear or branched. The alkylene group is preferably linear.

Examples of the dicarboxylic acid represented by General Formula (2) include oxalic acid, malonic acid, succinic acid, glutaric acid, adipic acid, pimelic acid, suberic acid, and diglycolic acid.

As the dicarboxylic acid represented by General Formula (2), one type may be used alone, or two or more types may be mixed and used.

The dicarboxylic acid represented by General Formula (2) is preferably one or more selected from the group consisting of oxalic acid, diglycolic acid, and azelaic acid, and more preferably one or more selected from the group consisting of oxalic acid and diglycolic acid.

The content of the dicarboxylic acid represented by General Formula (2) is 3% by mass or more and 6% by mass or less with respect to the total mass of the flux.

When the flux of the present embodiment contains an oxalic acid and diglycolic acid, the total content of the oxalic acid and the diglycolic acid is 80% by mass or more and 100% by mass or less with respect to the total mass of the dicarboxylic acid represented by General Formula (2).

When the total content of the oxalic acid and the diglycolic acid is equal to or more than the above-mentioned lower limit value, the solder ball generation prevention ability can be made excellent even when using the solder alloy powder in which the content of the solder alloy particles having the particle size of 8 µm or less is 99% by mass or more.

Furthermore, when the total content of the oxalic acid and the diglycolic acid is equal to or more than the above-mentioned lower limit value, the solder ball generation prevention ability can be made excellent even when using the solder alloy powder composed of the solder alloy particle group having the particle size of 5 µm or less.

### <Thixotropic agent>

Examples of the thixotropic agent include wax-based thixotropic agents, amide-based thixotropic agents, and sorbitol-based thixotropic agents.

Examples of the wax-based thixotropic agents include hardened castor oil.

Examples of the amide-based thixotropic agents include monoamides, bisamides, and polyamides. Examples thereof include lauric acid amide, palmitic acid amide, stearic acid amide, behenic acid amide, hydroxystearic acid amide, saturated fatty acid amide, oleic acid amide, erucic acid amide, unsaturated fatty acid amide, p-toluenemethane amide, aromatic amide, methylenebis(stearic acid amide), ethylenebis(lauric acid amide), ethylenebis(hydroxystearic acid amide), saturated fatty acid bis amide, methylenebis(oleic acid amide), unsaturated fatty acid bis amide, m-xylylenebis(stearic acid amide), aromatic bis amide, aliphatic polyamide (saturated fatty acid polyamide, unsaturated fatty acid polyamide), aromatic polyamide, substituted amide, methylolstearic acid amide, methylol amide, fatty acid ester amide, cyclic amide oligomers, and acyclic amide oligomers.

Examples of the above-mentioned cyclic amide oligomers include an amide oligomer in which a dicarboxylic acid and a diamine are cyclically polycondensed, an amide oligomer in which a tricarboxylic acid and a diamine are cyclically polycondensed, an amide oligomer in which a dicarboxylic acid and a triamine are cyclically polycondensed, an amide oligomer in which a tricarboxylic acid and a triamine are cyclically polycondensed, an amide oligomer in which a dicarboxylic acid and a tricarboxylic acid, and a diamine are cyclically polycondensed, an amide oligomer in which a dicarboxylic acid and a tricarboxylic acid, and a triamine are cyclically polycondensed, an amide oligomer in which a dicarboxylic acid, and a diamine and a triamine are cyclically polycondensed, an amide oligomer in which a tricarboxylic acid, and a diamine and a triamine are cyclically polycondensed, and an amide oligomer in which a dicarboxylic acid and a tricarboxylic acid, and a diamine and a triamine are cyclically polycondensed.

Furthermore, examples of the above-mentioned acyclic amide oligomers include a case of an amide oligomer in which a monocarboxylic acid, and a diamine and/or a triamine are acyclically polycondensed, and a case of an amide oligomer in which a dicarboxylic acid and/or a tricarboxylic acid, and a monoamine are acyclically polycondensed. In the case of an amide oligomer containing a monocarboxylic acid or a monoamine, the monocarboxylic acid and the monoamine function as terminal molecules, thereby resulting in an acyclic amide oligomer having a reduced molecular weight. Furthermore, when the acyclic amide oligomer is an amide compound in which a dicarboxylic acid and/or a tricarboxylic acid, and a diamine and/or a triamine are acyclically polycondensed, it is an acyclic polymer-based amide polymer. Furthermore, the acyclic amide oligomer also includes an amide oligomer in which a monocarboxylic acid and a monoamine are acyclically condensed.

For the thixotropic agent, one type may be used alone, or two or more types may be mixed and used.

The thixotropic agent preferably contains one or more selected from the group consisting of the amide-based thixotropic agents and the wax-based thixotropic agents.

The amide-based thixotropic agent is preferably polyamide.

The wax-based thixotropic agent is preferably hardened castor oil.

The total content of the thixotropic agents is preferably 5% by mass or more and 15% by mass or less, and more preferably 5% by mass or more and 10% by mass or less with respect to the total mass of the flux.

The total content of the amide-based thixotropic agent is preferably 2% by mass or more and 10% by mass or less, and more preferably 3% by mass or more and 8% by mass or less with respect to the total mass of the flux.

The content of the wax-based thixotropic agent is preferably 1% by mass or more and 6% by mass or less, and more preferably 2% by mass or more and 5% by mass or less with respect to the total mass of the flux.

### <Other components>

The flux of the present embodiment may contain a dicarboxylic acid (another dicarboxylic acid) other than the dicarboxylic acid represented by General Formula (2), an organic acid, or an amine as another activator, for example.

When the flux of the present embodiment contains the other dicarboxylic acid, the content of the dicarboxylic acid represented by General Formula (2) is preferably 60% by mass or more and 100% by mass or less, and more preferably 80% by mass or more and 100% by mass or less with respect to the total mass of the dicarboxylic acids.

Examples of the organic acid include eicosanedioic acid, citric acid, glycolic acid, salicylic acid, dipicolinic acid, dibutylaniline diglycolic acid, thioglycolic acid, terephthalic acid, dodecanedioic acid, parahydroxyphenylacetic acid, picolinic acid, phenylsuccinic acid, phthalic acid, fumaric acid, maleic acid, lauric acid, benzoic acid, tartaric acid, glycine, 1,3-cyclohexanedicarboxylic acid, 2,2-bis(hydroxymethyl)butanoic acid, 2,3-dihydroxybenzoic acid, 2,4-diethylglutaric acid, 2-quinoline carboxylic acid, 3-hydroxybenzoic acid, malic acid, p-anisic acid, stearic acid, 12-hydroxystearic acid, oleic acid, linoleic acid, and linolenic acid.

Examples of the amine include ethylamine, triethylamine, ethylenediamine, triethylenetetramine, 2-methylimidazole, 2-undecylimidazole, 2-heptadecylimidazole, 1,2-dimethylimidazole, 2-ethyl-4-methylimidazole, 2-phenylimidazole, 2-phenyl-4-methylimidazole, 1-benzyl-2-methylimidazole, 1-benzyl-2-phenylimidazole, 1-cyanoethyl-2-methylimidazole, 1-cyanoethyl-2-undecylimidazole, 1-cyanoethyl-2-ethyl-4-methylimidazole, 1-cyanoethyl-2-phenylimidazole, 1-cyanoethyl-2-undecylimidazolium trimellitate, 1-cyanoethyl-2-phenylimidazolium trimellitate, 2,4-diamino-6-[2'-methylimidazolyl-(1')]-ethyl-s-triazine, 2,4-diamino-6-[2'-undecylimidazolyl-(1')]-ethyl-s-triazine, 2,4-diamino-6-[2'-ethyl-4'-methylimidazolyl-(1')]-ethyl-s-triazine, a 2,4-diamino-6-[2'-methylimidazolyl-(1')]-ethyl-s-triazine isocyanuric acid adduct, a 2-phenylimidazole isocyanuric acid adduct, 2-phenyl-4,5-dihydroxymethylimidazole, 2-phenyl-4-methyl-5-hydroxymethylimidazole, 2,3-dihydro-1H-pyrrolo[1,2-a]benzimidazole, 1-dodecyl-2-methyl-3-benzylimidazolium chloride, 2-methylimidazoline, 2-phenylimidazoline, 2,4-diamino-6-vinyl-s-triazine, a 2,4-diamino-6-vinyl-s-triazine isocyanuric acid adduct, 2,4-diamino-6-methacryloyloxyethyl-s-triazine, an epoxy-imidazole adduct, 2-methylbenzimidazole, 2-octylbenzimidazole, 2-pentylbenzimidazole, 2-(1-ethylpentyl)benzimidazole, 2-nonylbenzimidazole, 2-(4-thiazolyl)benzimidazole, benzimidazole, 2-(2'-hydroxy-5'-methylphenyl)benzotriazole, 2-(2'-hydroxy-3'-tert-butyl-5'-methylphenyl)-5-chlorobenzotriazole, 2-(2'-hydroxy-3',5'-di-tert-amylphenyl)benzotriazole, 2-(2'-hydroxy-5'-tert-octylphenyl)benzotriazole, 2,2'-methylenebis[6-(2H-benzotriazol-2-yl)-4-tert-octylphenol], 6-(2-benzotriazolyl)-4-tert-octyl-6'-tert-butyl-4'-methyl-2,2'-methylenebisphenol, 1,2,3-benzotriazole, 1-[N,N-bis(2-ethylhexyl)aminomethyl]benzotriazole, carboxybenzotriazole, 1-[N,N-bis(2-ethylhexyl)aminomethyl]methylbenzotriazole, 2,2'-[[(methyl-1H-benzotriazol-1-yl)methyl]imino]bisethanol, 1-(1',2'-dicarboxyethyl)benzotriazole, 1-(2,3-dicarboxypropyl)benzotriazole, 1-[(2-ethylhexylamino)methyl]benzotriazole, 2,6-bis[(1H-benzotriazol-1-yl)methyl]-4-methylphenol, 5-methylbenzotriazole, and 5-phenyltetrazole.

Furthermore, the flux of the present embodiment may contain a surfactant, a silane coupling agent, or a colorant.

Examples of the surfactant include nonionic surfactants, and weak cationic surfactants.

Examples of the nonionic surfactants include polyethylene glycol, a polyethylene glycol-polypropylene glycol copolymer, an aliphatic alcohol polyoxyethylene adduct, an aromatic alcohol polyoxyethylene adduct, a polyhydric alcohol polyoxyethylene adduct.

Examples of the weak cationic surfactants include diamine-terminated polyethylene glycol, a diamine-terminated polyethylene glycol-polypropylene glycol copolymer, an aliphatic amine polyoxyethylene adduct, an aromatic amine polyoxyethylene adduct, and a polyvalent amine polyoxyethylene adduct.

Examples of surfactants other than the above-mentioned examples of the surfactants include polyoxyalkylene acetylene glycols, polyoxyalkylene glyceryl ethers, polyoxyalkylene alkyl ethers, polyoxyalkylene esters, polyoxyalkylene alkylamines, and polyoxyalkylene alkylamides.

Furthermore, the flux of the present embodiment may contain a rosin other than the acid-modified rosin. Examples of the rosin other than the acid-modified rosin include raw material rosins such as gum rosin, wood rosin, and tall oil rosin, and derivatives obtained from the raw material rosins.

Examples of the derivatives include purified rosin, hydrogenated rosin, disproportionated rosin, and polymerized rosin, and purified products, hydrides, and disproportionated products of the polymerized rosin.

When the flux of the present embodiment contains a rosin other than the acid-modified rosin, the content of the acid-modified rosin is preferably 60% by mass or more and 100% by mass or less, and more preferably 80% by mass or more and 100% by mass or less with respect to the total mass of the rosins.

When the content of the acid-modified rosin is equal to or more than the above-mentioned lower limit value, the hygroscopicity of the solder paste is reduced, which can make the solder ball generation prevention ability sufficient, even when using the solder alloy powder in which the content of the solder alloy particles having the particle size of 8 µm or less is 99% by mass or more.

Furthermore, when the content of the acid-modified rosin is equal to or more than the above-mentioned lower limit value, the solder ball generation prevention ability can be made excellent even when using the solder alloy powder composed of the solder alloy particle group having the particle size of 5 µm or less.

Furthermore, an antioxidant can be compounded into the flux of the present embodiment for the purpose of suppressing the oxidation of the solder alloy powder. As the antioxidant, a hindered phenol-based antioxidant such as 2,2'-methylenebis[6-(1-methylcyclohexyl)-p-cresol] can be used.

An additive such as a matting agent and an anti-foaming agent may be further added to the flux of the present embodiment.

### (Solder paste)

A solder paste of the present embodiment contains a specific solder alloy powder and the above-mentioned flux.

The solder alloy powder may be constituted of an Sn-only solder powder; or a powder of an Sn-Ag-based, Sn-Cu-based, Sn-Ag-Cu-based, Sn-Bi-based, or Sn-In-based solder alloy, or a powder of solder alloys in which Sb, Bi, In, Cu, Zn, As, Ag, Cd, Fe, Ni, Co, Au, Ge, P, or the like has been added to the above alloys.

The solder alloy powder may be constituted of a powder of an Sn-Pb-based solder alloy, or a powder of solder alloys in which Sb, Bi, In, Cu, Zn, As, Ag, Cd, Fe, Ni, Co, Au, Ge, P, or the like has been added to the Sn-Pb-based solder alloy.

In the solder alloy powder contained in the solder paste of the present embodiment, the content of solder alloy particles having the particle size of 8 µm or less is 99% by mass or more with respect to the total mass of the solder alloy powder.

The solder alloy powder contained in the solder paste of the present embodiment may be one composed of the solder alloy particle group having the particle size of 5 µm or less.

The size of the solder alloy powder contained in the solder paste of the present embodiment is a size (particle size distribution) satisfying the symbol 8 in the powder size classification (Table 2) in JIS Z 3284-1:2014.

Even when the solder alloy powder contained is one of such a case, the solder paste of the present embodiment has sufficient viscosity stability over time and solder ball prevention ability.

### Content of flux:

The content of the flux is preferably 5% to 30% by mass and more preferably 5% to 15% by mass with respect to the total mass of the solder paste.

When the content of the flux in the solder paste is in this range, the viscosity stability over time and the solder ball generation prevention ability are excellent.

### [Examples]

Hereinafter, the present invention will be described with reference to examples, but the present invention is not limited to the following examples.

### <Preparation of flux>

### (Examples 1 to 17 and Comparative Examples 1 to 4)

Fluxes of examples and comparative examples were blended using the compositions shown in Tables 1 and 2 below. An aliphatic polyamide was used as a polyamide.

The composition ratios in Tables 1 and 2 are % by mass when the total mass of the flux is 100% by mass, and blanks mean 0 % by mass.

### <Preparation of solder paste>

Each of the fluxes of the examples and each of the following solder alloy powders were mixed to blend solder pastes. In all of the blended solder pastes, the flux was 14% by mass, and the solder alloy powder was 86% by mass.

The solder alloy powder in the solder paste was a solder alloy in which Pb was 36% by mass, Ag was 1% by mass, Bi was 8% by mass, and the balance was Sn.

As the solder alloy powders, a solder alloy powder (1) or a solder alloy powder (2) was used. The solder alloy powder (1) had a size (particle size distribution) satisfying the symbol 8 in the powder size classification (Table 2) in JIS Z 3284-1:2014, and the solder alloy powder (2) had a size (particle size distribution) satisfying the symbol 6 therein.

### <Evaluation of viscosity stability over time (viscosity stability) of solder paste>

The viscosity stability over time of the solder paste blended by mixing the flux of each of the above-mentioned examples and the above-mentioned solder alloy powder (1) was verified. The results are shown in Tables 1 and 2.

### (1) Verification method

According to the method disclosed in "4.2 Viscosity Characteristic Test" of JIS Z 3284-3:2014, the viscosity of the obtained solder paste was continuously measured for 8 hours at the rotation speed: 10 rpm and the measurement temperature: 25°C using a rotational viscometer (PCU-205, manufactured by Malcom Co., Ltd.). Then, the initial viscosity (viscosity 30 minutes after the start of measurement) and the viscosity 8 hours after the start of measurement were compared to perform evaluation of the viscosity stability over time based on the following determination criterion.

### (2) Determination criterion

A: viscosity after 8 hours ≤ initial viscosity × 1.05
   A viscosity increase over time was small, which was favorable.
B: viscosity after 8 hours > initial viscosity × 1.05

A viscosity increase over time was large, which was defective.

### <Evaluation of solder ball generation prevention ability>

The flux of each of the above-mentioned examples and the solder alloy powder (1) were mixed to blend solder pastes. Furthermore, the flux of each of the above-mentioned examples and the solder alloy powder (2) were mixed to blend solder pastes. Then, the solder ball generation prevention ability of these solder pastes was verified. The results are shown in Tables 1 and 2.

### (1) Verification method

The obtained solder paste was printed on a Cu-OSP-treated glass epoxy substrate by setting the land size to 100 µm × 50 µm and the mask thickness to 40 µm. After allowing to stand for 3 days in the environment of 25°C and 50% humidity, reflow was caused. Subsequently, the number of solder balls having the size of 20 µm or less generated around the solder was measured.

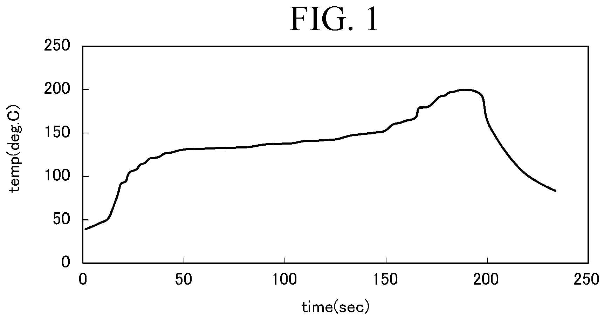

The reflow conditions were as follows: the temperature was raised from 50°C to 130°C at 2 to 3°C/sec; the temperature was maintained from 130°C to 150°C for 90 to 100 seconds; thereafter, the temperature was raised from 150°C to 200°C at 1 to 2°C/sec; and the temperature was maintained at 180°C or higher for 30 to 40 seconds. The oxygen concentration was 150 ppm or less. Fig. 1 shows a graph showing the temperature change at the time of the reflow.

### (2) Determination criterion

A: less than 10 solder particles of 20 µm or less were confirmed around the solder.
B: 10 or more and less than 40 solder particles of 20 µm or less were confirmed around the solder.
C: 40 or more solder particles of 20 µm or less, and a powder larger than 20 µm were confirmed to be generated or unaggregated around the solder.

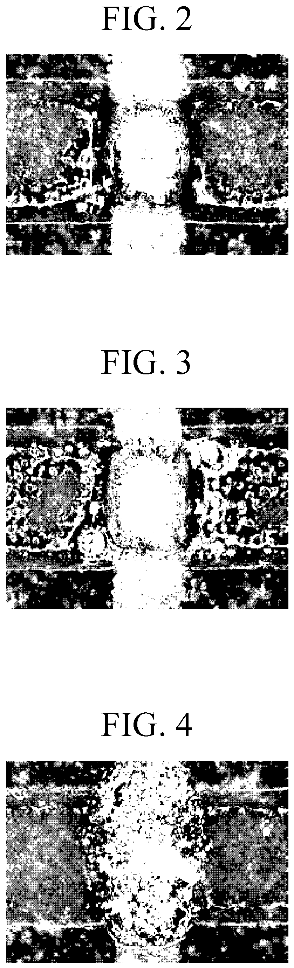

Examples of each of the evaluations are shown in Figs. 2 to 4.

Fig. 2 is a photograph obtained by imaging the state in which less than 10 solder particles of 20 µm or less were confirmed around the solder. Fig. 3 is a photograph obtained by imaging the state in which 10 or more and less than 40 solder particles of 20 µm or less were confirmed around the solder. Fig. 4 is a photograph obtained by imaging the state in which 40 or more solder particles of 20 µm or less, and a powder larger than 20 µm were confirmed to be generated or unaggregated around the solder.

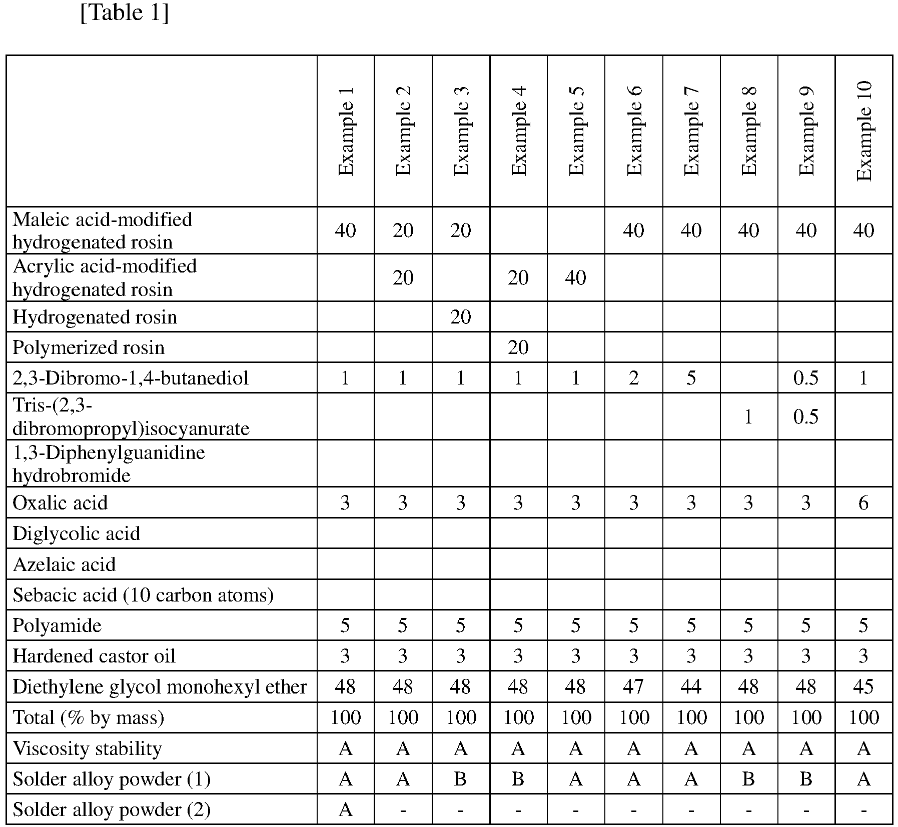

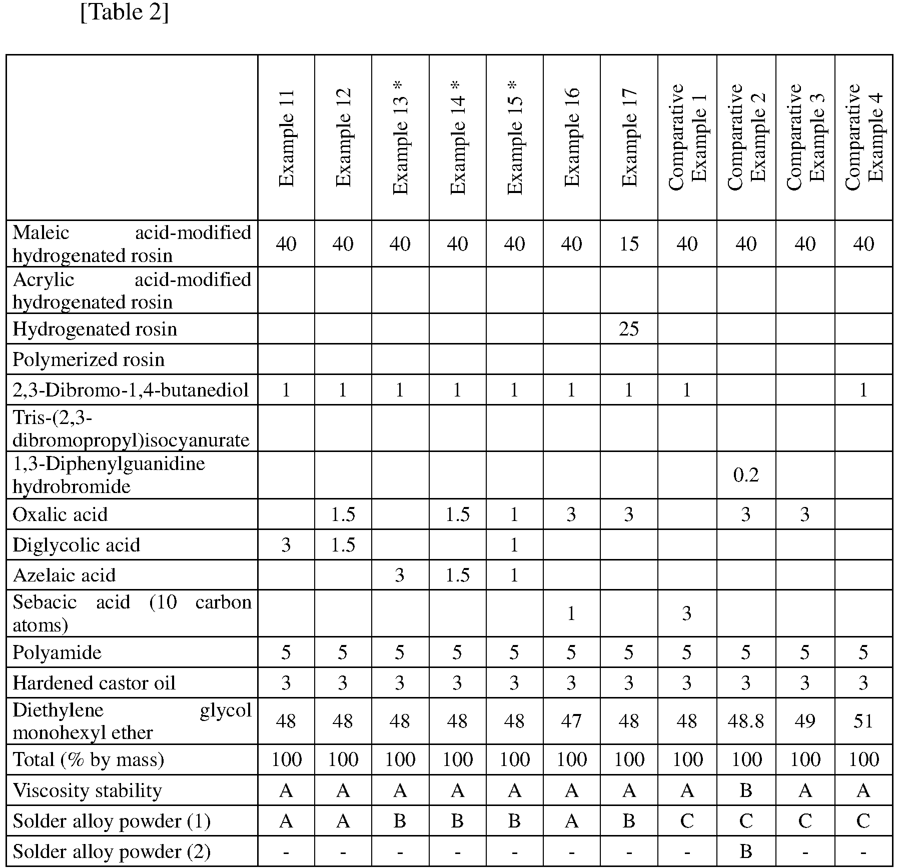

### (* not within the scope of claim 3)

In the present invention, as shown in Example 1, the solder paste having sufficient viscosity stability and solder ball generation prevention ability could be obtained with the flux containing a 2,3-dibromo-1,4-butanediol as the halogenated aliphatic compound, containing an oxalic acid as the dicarboxylic acid, containing a maleic acid-modified hydrogenated rosin as the acid-modified rosin, containing a polyamide (aliphatic polyamide) and a hardened castor oil as the thixotropic agent, and containing a diethylene glycol monohexyl ether as the solvent.

Furthermore, in both the case in which the solder alloy powder (1) was used and the case in which the solder alloy powder (2) was used, the evaluation of the solder ball generation prevention ability was A.

Even when a plurality of types of the acid-modified rosin were incorporated as shown in Example 2, the solder paste having sufficient viscosity stability and solder ball generation prevention ability could be obtained. Furthermore, in the case in which the solder alloy powder (1) was used, the evaluation of the solder ball generation prevention ability was A.

Even when the content of the acid-modified rosin was changed and the hydrogenated rosin was incorporated as shown in Example 3, the solder paste having sufficient viscosity stability and solder ball generation prevention ability could be obtained. Furthermore, in the case in which the solder alloy powder (1) was used, the evaluation of the solder ball generation prevention ability was B.

Even when the type and the content of the acid-modified rosin were changed and the polymerized rosin was incorporated as shown in Example 4, the solder paste having sufficient viscosity stability and solder ball generation prevention ability could be obtained. Furthermore, in the case in which the solder alloy powder (1) was used, the evaluation of the solder ball generation prevention ability was B.

Even when the type of the acid-modified rosin was changed as shown in Example 5, the solder paste having sufficient viscosity stability and solder ball generation prevention ability could be obtained.

Furthermore, in the case in which the solder alloy powder (1) was used, the evaluation of the solder ball generation prevention ability was A.

Even when the content of the halogenated aliphatic compound was changed as shown in Examples 6 and 7, the solder paste having sufficient viscosity stability and solder ball generation prevention ability could be obtained. Furthermore, in the case in which the solder alloy powder (1) was used, the evaluation of the solder ball generation prevention ability was A.

Even when the type of the halogenated aliphatic compound was changed as shown in Example 8, the solder paste having sufficient viscosity stability and solder ball generation prevention ability could be obtained. Furthermore, in the case in which the solder alloy powder (1) was used, the evaluation of the solder ball generation prevention ability was B.

Even when the content of the 2,3-dibromo-1,4-butanediol was reduced and a plurality of types of the halogenated aliphatic compound were incorporated as shown in Example 9, the solder paste having sufficient viscosity stability and solder ball generation prevention ability could be obtained. Furthermore, in the case in which the solder alloy powder (1) was used, the evaluation of the solder ball generation prevention ability was B.

Even when the content of the dicarboxylic acid was changed as shown in Example 10, the solder paste having sufficient viscosity stability and solder ball generation prevention ability could be obtained. Furthermore, in the case in which the solder alloy powder (1) was used, the evaluation of the solder ball generation prevention ability was A.

Even when the type of the dicarboxylic acid was changed as shown in Example 11, the solder paste having sufficient viscosity stability and solder ball generation prevention ability could be obtained. Furthermore, in the case in which the solder alloy powder (1) was used, the evaluation of the solder ball generation prevention ability was A.

Even when a plurality of types of the dicarboxylic acid were incorporated as shown in Example 12, the solder paste having sufficient viscosity stability and solder ball generation prevention ability could be obtained. Furthermore, in the case in which the solder alloy powder (1) was used, the evaluation of the solder ball generation prevention ability was A.

Even when the type of the dicarboxylic acid was changed as shown in Example 13, the solder paste having sufficient viscosity stability and solder ball generation prevention ability could be obtained. Furthermore, in the case in which the solder alloy powder (1) was used, the evaluation of the solder ball generation prevention ability was B.

Even when a plurality of types of the dicarboxylic acid were incorporated as shown in Examples 14 and 15, the solder paste having sufficient viscosity stability and solder ball generation prevention ability could be obtained. Furthermore, in the case in which the solder alloy powder (1) was used, the evaluation of the solder ball generation prevention ability was B.

Even when a sebacic acid, which is a dicarboxylic acid that has not been specified in the present invention, was further incorporated as shown in Example 16, the solder paste having sufficient viscosity stability and solder ball generation prevention ability could be obtained. Furthermore, in the case in which the solder alloy powder (1) was used, the evaluation of the solder ball generation prevention ability was A.

Even when the content of the acid-modified rosin was reduced and the hydrogenated rosin was incorporated as shown in Example 17, the solder paste having sufficient viscosity stability and solder ball generation prevention ability could be obtained. Furthermore, in the case in which the solder alloy powder (1) was used, the evaluation of the solder ball generation prevention ability was B.

With the fluxes of Examples 1 to 17 containing the dicarboxylic acid specified in the present invention, the solder paste having a sufficient solder ball generation prevention ability could be obtained.

On the other hand, with the fluxes of Comparative Examples 1 and 4 not containing the dicarboxylic acid specified in the present invention, the solder ball generation prevention ability of the solder paste was insufficient.

Based on these results, it was clarified that the solder paste having a sufficient solder ball generation prevention ability could be obtained by incorporating the dicarboxylic acid specified in the present invention.

With the fluxes of Examples 1 to 17 containing the halogenated aliphatic compound specified in the present invention, the solder paste having a sufficient viscosity stability could be obtained.

On the other hand, with the flux of Comparative Example 2 not containing the halogenated aliphatic compound specified in the present invention but containing the hydrohalic acid salt, the solder ball generation prevention ability was sufficient when the solder alloy powder (2) was used. However, when the solder alloy powder (1) was used, the viscosity stability and the solder ball generation prevention ability of the solder paste were insufficient.

Based on these results, it was clarified that by incorporating the halogenated aliphatic compound specified in the present invention, the solder paste in which the solder alloy powder (1) was used and which was evaluated to have sufficient viscosity stability and solder ball generation prevention ability could be obtained.

Furthermore, with the flux of Comparative Example 3 not containing the halogenated aliphatic compound specified in the present invention and not containing the hydrohalic acid salt, the viscosity stability of the solder paste was sufficient, whereas the solder ball generation prevention ability thereof was insufficient.

Based on these results, it was clarified that by incorporating the halogenated aliphatic compound specified in the present invention, the solder ball generation prevention ability could be evaluated to be sufficient.

Furthermore, using the fluxes of Examples 1 to 17, and the solder alloy powder composed of the alloy particles having the particle size of 5 µm or less, the viscosity stability and the solder ball generation prevention ability of the solder paste were similarly evaluated.

As a result, when the fluxes of Examples 1 to 17 were used, the evaluation of the viscosity stability was A. Furthermore, when the fluxes of Examples 1, 2, 5, 6, 7, 10, 11, 12, and 16 were used, the evaluation of the solder ball generation prevention ability was A. Furthermore, when the fluxes of Examples 3, 4, 8, 9, 13 to 15, and 17 were used, the evaluation of the solder ball generation prevention ability was B.

### [Industrial Applicability]

According to the present invention, it is possible to provide a flux and a solder paste which have excellent viscosity stability over time and are capable of preventing the generation of solder balls, even when using a solder alloy powder in which the content of alloy particles having a particle size of 8 µm or less is 99% by mass or more. The solder paste and the flux can be suitably used for soldering fine components to a substrate.

## Claims

1. A solder paste comprising:
a solder alloy powder in which a content of solder alloy particles having a particle size of 8 µm or less is 99% by mass or more with respect to a total mass of the solder alloy powder; and
a flux,
wherein the flux contains an acid-modified rosin, a solvent, an activator, and a thixotropic agent,
the activator contains a halogenated aliphatic compound, and a dicarboxylic acid represented by General Formula (2), 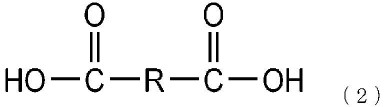
in the formula, R represents an alkylene group having 1 to 7 carbon atoms, or a single bond, provided that a methylene group constituting the alkylene group may be substituted with an oxygen atom,
an acid value of the acid-modified rosin is 200 mgKOH/g or more,
a content of the acid-modified rosin is 15% by mass or more and 40% by mass or less with respect to a total mass of the flux,
a content of the halogenated aliphatic compound is 1% by mass or more and 5% by mass or less with respect to a total mass of the flux,
**characterized in that**
a content of the dicarboxylic acid is 3% by mass or more and 6% by mass or less with respect to a total mass of the flux, and
the size of the solder alloy powder is a size of particle size distribution satisfying the symbol 8 in the powder size classification Table 2 in JIS Z 3284-1:2014.

2. The solder paste according to claim 1, wherein the halogenated aliphatic compound is 2,3-dibromo-1,4-butanediol.

3. A flux which is used for a solder paste containing a solder alloy powder,
wherein in the solder alloy powder, a content of solder alloy particles having a particle size of 8 µm or less is 99% by mass or more with respect to a total mass of the solder alloy powder,
the flux contains a rosin, a solvent, an activator, and a thixotropic agent,
the rosin includes an acid-modified rosin,
the activator contains a halogenated aliphatic compound, and a dicarboxylic acid represented by General Formula (2),
the dicarboxylic acid includes one or more selected from the group consisting of an oxalic acid and a diglycolic acid, 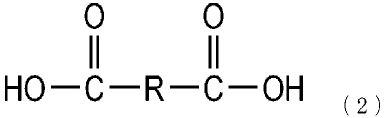
in the formula, R represents an alkylene group having 1 to 7 carbon atoms, or a single bond, provided that a methylene group constituting the alkylene group may be substituted with an oxygen atom,
an acid value of the acid-modified rosin is 200 mgKOH/g or more,
a content of the acid-modified rosin is 15% by mass or more and 40% by mass or less with respect to a total mass of the flux,
a content of the halogenated aliphatic compound is 1% by mass or more and 5% by mass or less with respect to a total mass of the flux,
**characterized in that**
a content of the dicarboxylic acid is 3% by mass or more and 6% by mass or less with respect to a total mass of the flux,
a total content of the oxalic acid and the diglycolic acid is 80% by mass or more and 100% by mass or less with respect to a total mass of the dicarboxylic acid, and
the size of the solder alloy powder is a size of particle size distribution satisfying the symbol 8 in the powder size classification Table 2 in JIS Z 3284-1:2014.

4. The flux according to claim 3, wherein a content of the acid-modified rosin is 60% by mass or more and 100% by mass or less with respect to a total mass of the rosin.

5. The flux according to claim 3,
wherein the halogenated aliphatic compound contains a halogenated aliphatic alcohol, and
a content of the halogenated aliphatic alcohol is 60% by mass or more and 100% by mass or less with respect to a total mass of the halogenated aliphatic compound.

6. The flux according to any one of claims 3 to 5, wherein the halogenated aliphatic alcohol is 2,3-dibromo-1,4-butanediol.

7. Use of a flux for making a solder paste containing a solder alloy powder and the flux,
wherein in the solder alloy powder, a content of solder alloy particles having a particle size of 8 µm or less is 99% by mass or more with respect to a total mass of the solder alloy powder, wherein the flux contains an acid-modified rosin, a solvent, an activator, and a thixotropic agent,
the activator contains a halogenated aliphatic compound, and a dicarboxylic acid represented by General Formula (2), 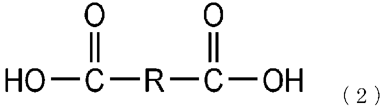
in the formula, R represents an alkylene group having 1 to 7 carbon atoms, or a single bond, provided that a methylene group constituting the alkylene group may be substituted with an oxygen atom,
an acid value of the acid-modified rosin is 200 mgKOH/g or more,
a content of the acid-modified rosin is 15% by mass or more and 40% by mass or less with respect to a total mass of the flux,
a content of the halogenated aliphatic compound is 1% by mass or more and 5% by mass or less with respect to a total mass of the flux, and
**characterized in that**
a content of the dicarboxylic acid is 3% by mass or more and 6% by mass or less with respect to a total mass of the flux, and
the size of the solder alloy powder is a size of particle size distribution satisfying the symbol 8 in the powder size classification Table 2 in JIS Z 3284-1:2014.

## Patentansprüche

1. Lötpaste, umfassend:
ein Lötlegierungspulver, in dem ein Gehalt an Lötlegierungsteilchen mit einer Teilchengröße von 8 µm oder weniger 99 Massen-% oder mehr, bezogen auf die Gesamtmasse des Lötlegierungspulvers, ist; und
ein Flussmittel,
wobei das Flussmittel ein säuremodifiziertes Kolophonium, ein Lösungsmittel, einen Aktivator und ein thixotropes Mittel enthält,
der Aktivator eine halogenierte aliphatische Verbindung und eine Dicarbonsäure enthält, dargestellt durch allgemeine Formel (2) 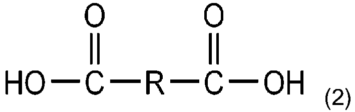
in der Formel bedeutet R eine Alkylengruppe, die 1 bis 7 Kohlenstoffatome aufweist, oder eine Einfachbindung darstellt, mit der Maßgabe, dass eine Methylengruppe, die die Alkylengruppe bildet, mit einem Sauerstoffatom substituiert sein kann,
eine Säurezahl des säuremodifizierten Kolophoniums 200 mgKOH/g oder mehr ist,
ein Gehalt des säuremodifizierten Kolophoniums 15 Massen-% oder mehr und 40 Massen-% oder weniger, bezogen auf eine Gesamtmasse des Flussmittels, ist,
ein Gehalt der halogenierten aliphatischen Verbindung 1 Massen-% oder mehr und 5 Massen-% oder weniger, bezogen auf die Gesamtmasse des Flussmittels, ist,
**dadurch gekennzeichnet, dass**
ein Gehalt der Dicarbonsäure 3 Massen-% oder mehr und 6 Massen-% oder weniger, bezogen auf die Gesamtmasse des Flussmittels, ist, und
die Größe des Lötlegierungspulvers eine Größe mit einer Partikelgrößenverteilung ist, die dem Symbol 8 in der Teilchengrößenverteilung Tabelle 2 in JIS Z 3284-1:2014 entspricht.

2. Lötpaste nach Anspruch 1, wobei die halogenierte aliphatische Verbindung 2,3-Dibrom-1,4-butandiol ist.

3. Flussmittel, das für eine Lötpaste verwendet wird, die ein Lötlegierungspulver enthält,
wobei der Gehalt an Lötlegierungsteilchen mit einer Teilchengröße von 8 µm oder weniger in dem Lötlegierungspulver 99 Massen-% oder mehr, bezogen auf die Gesamtmasse des Lötlegierungspulvers, ist,
das Flussmittel ein Kolophonium, ein Lösungsmittel, einen Aktivator und ein thixotropes Mittel enthält,
das Kolophonium ein säuremodifiziertes Kolophonium enthält,
der Aktivator eine halogenierte aliphatische Verbindung und eine Dicarbonsäure enthält, dargestellt durch allgemeine Formel (2)
die Dicarbonsäure eine oder mehrere, ausgewählt aus der Gruppe, bestehend aus einer Oxalsäure und einer Diglykolsäure beinhaltet, 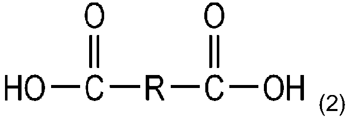
in der Formel bedeutet R eine Alkylengruppe, die 1 bis 7 Kohlenstoffatome aufweist, oder eine Einfachbindung darstellt, mit der Maßgabe, dass eine Methylengruppe, die die Alkylengruppe bildet, mit einem Sauerstoffatom substituiert sein kann,
eine Säurezahl des säuremodifizierten Kolophoniums 200 mgKOH/g oder mehr ist,
ein Gehalt des säuremodifizierten Kolophoniums 15 Massen-% oder mehr und 40 Massen-% oder weniger, bezogen auf eine Gesamtmasse des Flussmittels, ist,
ein Gehalt der halogenierten aliphatischen Verbindung 1 Massen-% oder mehr und 5 Massen-% oder weniger, bezogen auf die Gesamtmasse des Flussmittels, ist,
**dadurch gekennzeichnet, dass**
der Gehalt der Dicarbonsäure 3 Massen-% oder mehr und 6 Massen-% oder weniger, bezogen auf die Gesamtmasse des Flussmittels, ist,
der Gesamtgehalt der Oxalsäure und der Diglykolsäure 80 Massen-% oder mehr und 100 Massen-% oder weniger, bezogen auf die Gesamtmasse der Dicarbonsäure, ist, und
die Größe des Lötlegierungspulvers eine Größe mit einer Partikelgrößenverteilung ist, die dem Symbol 8 in der Teilchengrößenverteilung Tabelle 2 in JIS Z 3284-1:2014 entspricht.

4. Flussmittel nach Anspruch 3, wobei der Gehalt des säuremodifiziertem Kolophoniums 60 Massen-% oder mehr und 100 Massen-% oder weniger, bezogen auf die Gesamtmasse des Kolophoniums, ist.

5. Flussmittel nach Anspruch 3,
wobei die halogenierte aliphatische Verbindung einen halogenierten aliphatischen Alkohol enthält, und
der Gehalt des halogenierten aliphatischen Alkohols 60 Massen-% oder mehr und 100 Massen-% oder weniger, bezogen auf die Gesamtmasse der halogenierten aliphatischen Verbindung, ist.

6. Flussmittel nach einem der Ansprüche 3 bis 5, wobei der halogenierte aliphatische Alkohol 2,3-Dibrom-1,4-butandiol ist.

7. Verwendung eines Flussmittels zur Herstellung einer Lötpaste, die ein Lötlegierungspulver und das Flussmittel enthält,
wobei ein Gehalt an Lötlegierungsteilchen mit einer Teilchengröße von 8 µm oder weniger in dem Lötlegierungspulver 99 Massen-% oder mehr in Bezug auf die Gesamtmasse des Lötlegierungspulvers ist, wobei das Flussmittel ein säuremodifiziertes Kolophonium, ein Lösungsmittel, einen Aktivator und ein thixotropes Mittel enthält,
der Aktivator eine halogenierte aliphatische Verbindung und eine Dicarbonsäure enthält, dargestellt durch allgemeine Formel (2) 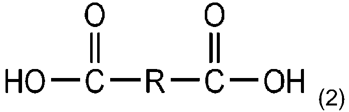
in der Formel bedeutet R eine Alkylengruppe, die 1 bis 7 Kohlenstoffatome aufweist, oder eine Einfachbindung darstellt, mit der Maßgabe, dass eine Methylengruppe, die die Alkylengruppe bildet, mit einem Sauerstoffatom substituiert sein kann,
eine Säurezahl des säuremodifizierten Kolophoniums 200 mgKOH/g oder mehr ist,
ein Gehalt des säuremodifizierten Kolophoniums 15 Massen-% oder mehr und 40 Massen-% oder weniger, bezogen auf eine Gesamtmasse des Flussmittels, ist,
ein Gehalt der halogenierten aliphatischen Verbindung 1 Massen-% oder mehr und 5 Massen-% oder weniger, bezogen auf die Gesamtmasse des Flussmittels, ist, und
**dadurch gekennzeichnet, dass**
ein Gehalt der Dicarbonsäure 3 Massen-% oder mehr und 6 Massen-% oder weniger, bezogen auf die Gesamtmasse des Flussmittels, ist, und
die Größe des Lötlegierungspulvers eine Größe mit einer Partikelgrößenverteilung ist, die dem Symbol 8 in der Teilchengrößenverteilung Tabelle 2 in JIS Z 3284-1:2014 entspricht.

## Revendications

1. Pâte à braser comprenant :
une poudre d'alliage à braser dans laquelle la teneur en particules d'alliage à braser ayant une taille de particules inférieure ou égale à 8 µm est de 99 % en masse ou plus par rapport à une masse totale de la poudre d'alliage à braser ; et
un flux,
dans laquelle le flux contient une résine modifiée par un acide, un solvant, un activateur et un agent thixotrope,
l'activateur contient un composé aliphatique halogéné et un acide dicarboxylique représenté par la formule générale (2), 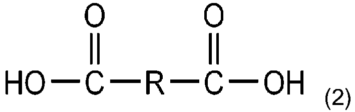
dans la formule, R représente un groupe alkylène ayant de 1 à 7 atomes de carbone, ou une liaison simple, à condition qu'un groupe méthylène constituant le groupe alkylène puisse être substitué par un atome d'oxygène,
un indice d'acidité de la résine modifiée par un acide est supérieur ou égal à 200 mgKOH/g,
une teneur de la résine modifiée par un acide est supérieure ou égale à 15 % en masse et inférieure ou égale à 40 % en masse par rapport à une masse totale du flux,
une teneur du composé aliphatique halogéné est supérieure ou égale à 1 % en masse et inférieure ou égale à 5 % en masse par rapport à une masse totale du flux,
**caractérisée en ce que**
une teneur de l'acide dicarboxylique est supérieure ou égale à 3 % en masse et inférieure ou égale à 6 % en masse par rapport à une masse totale du flux, et
la taille de la poudre d'alliage à braser est une taille de distribution granulométrique satisfaisant au symbole 8 dans le tableau 2 de la classification des tailles de poudre de la norme JIS Z 3284-1:2014.

2. Pâte à braser selon la revendication 1, dans laquelle le composé aliphatique halogéné est le 2,3-dibromo-1,4-butanediol.

3. Flux utilisé pour une pâte à braser contenant une poudre d'alliage à braser,
dans lequel, dans la poudre d'alliage à braser, une teneur en particules d'alliage à braser ayant une taille de particules inférieure ou égale à 8 µm est de 99 % en masse ou plus par rapport à une masse totale de la poudre d'alliage à braser,
le flux contient une résine, un solvant, un activateur et un agent thixotrope,
la résine comprend une résine modifiée par un acide,
l'activateur contient un composé aliphatique halogéné et un acide dicarboxylique représenté par la formule générale (2),
l'acide dicarboxylique comprend un ou plusieurs acides choisis dans le groupe constitué par un acide oxalique et un acide diglycolique, 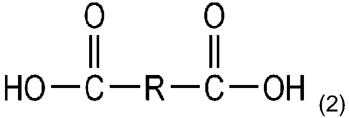
dans la formule, R représente un groupe alkylène ayant de 1 à 7 atomes de carbone, ou une liaison simple, à condition qu'un groupe méthylène constituant le groupe alkylène puisse être substitué par un atome d'oxygène,
un indice d'acidité de la résine modifiée par un acide est supérieur ou égal à 200 mgKOH/g,
une teneur de la résine modifiée par un acide est supérieure ou égale à 15 % en masse et inférieure ou égale à 40 % en masse par rapport à une masse totale du flux,
une teneur du composé aliphatique halogéné est supérieure ou égale à 1 % en masse et inférieure ou égale à 5 % en masse par rapport à une masse totale du flux,
**caractérisée en ce que**
une teneur de l'acide dicarboxylique est supérieure ou égale à 3 % en masse et inférieure ou égale à 6 % en masse par rapport à une masse totale du flux,
une teneur totale en acide oxalique et en acide diglycolique est supérieure ou égale à 80 % en masse et inférieure ou égale à 100 % en masse par rapport à une masse totale de l'acide dicarboxylique, et
la taille de la poudre d'alliage à braser est une taille de distribution granulométrique satisfaisant au symbole 8 dans le tableau 2 de la classification des tailles de poudre de la norme JIS Z 3284-1:2014.

4. Flux selon la revendication 3, dans lequel une teneur de la résine modifiée par un acide supérieure ou égale à 60 % en masse et inférieure ou égale à 100 % en masse par rapport à une masse totale de la résine.

5. Flux selon la revendication 3,
dans lequel le composé aliphatique halogéné contient un alcool aliphatique halogéné, et
une teneur en alcool aliphatique halogéné est supérieure ou égale à 60 % en masse et inférieure ou égale à 100 % en masse par rapport à une masse totale du composé aliphatique halogéné.

6. Flux selon l'une quelconque des revendications 3 à 5, dans lequel l'alcool aliphatique halogéné est le 2,3-dibromo-1,4-butanediol.

7. Utilisation d'un flux pour la fabrication d'une pâte à braser contenant une poudre d'alliage à braser et le flux,
dans laquelle, dans la poudre d'alliage à braser, une teneur en particules d'alliage à braser ayant une taille de particules inférieure ou égale à 8 µm est de 99 % en masse ou plus par rapport à une masse totale de la poudre d'alliage à braser, dans laquelle le flux contient une résine modifiée par un acide, un solvant, un activateur et un agent thixotrope,
l'activateur contient un composé aliphatique halogéné et un acide dicarboxylique représenté par la formule générale (2), 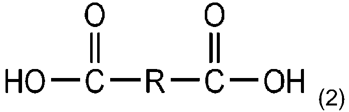
dans la formule, R représente un groupe alkylène ayant de 1 à 7 atomes de carbone, ou une liaison simple, à condition qu'un groupe méthylène constituant le groupe alkylène puisse être substitué par un atome d'oxygène,
un indice d'acidité de la résine modifiée par un acide est supérieur ou égal à 200 mgKOH/g,
une teneur de la résine modifiée par un acide est supérieure ou égale à 15 % en masse et inférieure ou égale à 40 % en masse par rapport à une masse totale du flux,
une teneur du composé aliphatique halogéné est supérieure ou égale à 1 % en masse et inférieure ou égale à 5 % en masse par rapport à une masse totale du flux, et
**caractérisée en ce que**
une teneur de l'acide dicarboxylique est supérieure ou égale à 3 % en masse et inférieure ou égale à 6 % en masse par rapport à une masse totale du flux, et
la taille de la poudre d'alliage à braser est une taille de distribution granulométrique satisfaisant au symbole 8 dans le tableau 2 de la classification des tailles de poudre de la norme JIS Z 3284-1:2014.
